# EUROPEAN PATENT APPLICATION

(11) **EP 4 779 948 A1**
(43) Date of publication of application: **22.07.2026**
(21) Application number: 25165042.0
(22) Date of filing: 20.03.2025
(51) Int. Cl.: H04L 45/02, H04W 40/24, H04L 45/00, H04W 84/18

(54) **A METHOD OF BUILDING A MULTI-HOP UWB NETWORK**

(30) Priority: 20.01.2025 IN 202541004603
(71) Applicant: NXP B.V., 5656 AG Eindhoven (NL)
(72) Inventor: Parthasarathi, Srivathsa Masthi, 5656AG Eindhoven (NL); Corbalán Pelegrín, Pablo, 5656AG Eindhoven (NL); Jogi, Sunil Dilipkumar, 5656AG Eindhoven (NL)
(74) Representative: Colaiuda, Antonella

(57) **Abstract**

The present disclosure provides a method of building a UWB network, comprising a plurality of spatially-separated UWB nodes, wherein the plurality of UWB nodes comprises a gateway node and a plurality of non-gateway nodes, the method comprising; identifying at least one gateway-neighbouring node; setting the gateway node into a two-way ranging, TWR, controller mode to provide for transfer of data to each of the identified gateway-neighbouring nodes; for at least a first gateway-neighbouring, FGN, node: identifying, if available, at least one FGN-child node; setting the FGN node into a TWR controller mode to provide for transfer of data to each of the identified FGN-child nodes, wherein the operation of each node in its respective TWR controller mode is non-contemporaneous with the operation of any of its neighbouring nodes in their respective TWR controller mode.

## Description

### Field

The present disclosure relates to a method for creating a multi-hop UWB network, a UWB network, a computer program product and a system comprising a plurality of devices and a UWB network.

### Summary

According to a first aspect of the present disclosure, there is provided a method of building a UWB network, wherein the UWB network comprises a plurality of spatially separated UWB nodes, wherein the plurality of UWB nodes comprises a gateway node and a plurality of non-gateway nodes, the method comprising;
setting the gateway node into a contention-based-ranging, CBR, initiator mode and setting the non-gateway nodes into a CBR responder mode wherein operating in the CBR initiator mode allows the gateway node to identify at least one neighbouring node operating in the CBR responder mode;
identifying, by way of the gateway node operating in the CBR initiator mode, at least one gateway-neighbouring node, such that the plurality of UWB nodes comprises the gateway node and at least one gateway-neighbouring node and zero or more undiscovered nodes;
setting the gateway node into a two-way ranging, TWR, controller mode and setting each of the identified gateway-neighbouring nodes into a TWR controlee mode in which the gateway node is configured to transfer data to each of the identified gateway-neighbouring nodes;
for at least a first gateway-neighbouring, FGN, node:
   setting the FGN node into the CBR initiator mode and setting any undiscovered node into the CBR responder mode wherein operating in the CBR initiator mode allows the FGN node to identify any neighbouring child node operating in the CBR responder mode wherein a child node is arranged downstream from the gateway node and the FGN node;
   identifying, if available, by way of the FGN node operating in the CBR initiator mode, at least one FGN-child node such that, if an FGN-child node is identified, the plurality of UWB nodes comprises the gateway node, at least the FGN node, at least one FGN-child node and zero or more undiscovered nodes and, if an FGN-child node is not identified, the plurality of UWB nodes comprises the gateway node and at least the FGN node and zero or more undiscovered nodes; and
   if at least one FGN-child node has been identified, setting the FGN node into a TWR controller mode and setting each FGN-child node into a TWR controlee mode in which the FGN node is configured to transfer data to the or each identified FGN-child node,
wherein the operation of each node in its respective TWR controller mode is non-contemporaneous with the operation of any of its neighbouring nodes in their respective TWR controller mode.

In one or more embodiments, method may comprise repeating the steps of:
setting a node into the CBR initiator mode;
setting each undiscovered node into the CBR responder mode;
identifying any child nodes that neighbour the node operating in the CBR initiator mode; and if neighbouring child nodes have been identified;
setting the node into a TWR controller mode and setting each neighbouring child node into a TWR controlee mode.

In one or more embodiments, the method may further comprise generating a map of the network based on interconnections between the nodes, wherein an interconnection between two of the nodes in the map is defined based on those two nodes being determined to be neighbouring nodes.

In one or more embodiments, the method may further comprise receiving instructions at the gateway node that a data packet is to be transmitted to a destination node, wherein the destination node is a non-gateway node in the plurality of nodes; generating routing data for inclusion in the data packet indicative of the nodes of the UWB network that are to be traversed for the data packet to reach the destination node; and transmitting the data packet to the destination node according to the routing data.

In one or more embodiments, the method may further comprise receiving instructions at a non-gateway node that a data packet is to be transmitted to a destination node wherein the destination node is another non-gateway node in the plurality of nodes or the gateway node; generating routing data for inclusion in the data packet indicative of the nodes of the UWB network that are to be traversed for the data packet to reach the destination node; and transmitting the data packet to the destination node according to the routing data.

In one or more embodiments, the routing data may include instructions to cause the data packet to be routed via neighbouring nodes during the operation of those neighbouring nodes in their respective TWR controller mode and TWR controlee mode.

In one or more embodiments, the step of generating routing data may comprise generating the routing data based on the destination node and the map of the network.

According to a second aspect of the present disclosure, there is provided a UWB network comprising a plurality of spatially separated UWB nodes wherein the plurality of UWB nodes comprises a gateway node and a plurality of non-gateway nodes and further comprising a controller, wherein the controller is configured to provide instructions to the gateway node to implement the method of the first aspect.

In one or more embodiments, each UWB node may be further configured to perform one or more additional functionalities selected from: remote access; control system; system monitoring; sensing; localisation; and navigation.

According to a third aspect of the present disclosure, there is provided a computer program product comprising computer program code configured to, when executed by a controller, cause a controller to provide instructions to a gateway node of a UWB network to implement the method of any of the first aspect.

According to a fourth aspect of the present disclosure, there is provided a system comprising a plurality of devices and a UWB network of claim the second aspect, wherein each device comprises a UWB node of the plurality of UWB nodes such that the UWB network is distributed across the devices.

In one or more embodiments, the devices may be IoT devices in an array or IoT devices.

While the disclosure is amenable to various modifications and alternative forms, specifics thereof have been shown by way of example in the drawings and will be described in detail.

It should be understood, however, that other embodiments, beyond the particular embodiments described, are possible as well. All modifications, equivalents, and alternative embodiments falling within the scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of UWB network according to the present disclosure;
Figure 2 shows an example embodiment of a UWB network comprising three UWB nodes;
Figure 3 shows an example method according to the present disclosure;
Figure 4 shows an example timing diagram depicting how a gateway node establishes communication with its neighbours;
Figure 5 shows an example timing diagram depicting how a gateway-neighbouring node establishes communication with its downstream neighbours;
Figure 6 shows an example system according to the present disclosure; and
Figure 7 shows an example computer readable medium.

### Detailed Description

Ultra-wideband (UWB) technology is becoming widely adopted thanks to its accurate distance and positioning estimation capabilities, especially for access applications (e.g., car access) and mobile applications due to the adoption of the technology in cars and smartphones. Most of the standardised applications today relate to peer-to-peer (P2P) networks in which one device communicates or performs ranging with one or more devices within a wireless vicinity. Standardised applications beyond P2P generally relate to real-time location systems (RTLS), in which a UWB infrastructure composed of tens to hundreds of anchors (UWB nodes) track the position of many mobile devices within an area. However, for these applications to operate, there is normally a requirement of a back-up wired or wireless infrastructure enabling the configuration and management of the anchors. This leaves an unresolved problem in which multi-hop UWB networks need to be handled and operated without support from external wireless or wired technologies. Example applications in this field may involve multi-hop data collection systems or event-based control systems.

A particular application requiring UWB networking support is the installation and management of large numbers of IoT (Internet of Things) devices. UWB technology could be used in these deployments to (1) automatically estimate the relative position of all IoT devices deployed and (2) provide means to configure each IoT device individually by sending commands or data over multiple wireless hops, or (3) collect performance data from each IoT device at a centralised location. Such an application requires accurate distance estimation with TWR as well as networking capabilities involving multi-hop routing with upstream and downstream routing supporting many-to-one and one-to-many data traffic patterns.

The present disclosure provides for a method of building a single or multi-hop UWB network to operate as a UWB network. In particular, the method of the present disclosure may allow an existing UWB network that has been configured for other purposes to be configured to operate in a multi-hop mode. That is, a multi-hop network built up of standardised UWB building blocks can be configured to operate in the multi-hop mode for data transfer and additional functionalities. In some implementations of the present disclosure, the UWB network may not be large enough to result in a multi-hop network, however, the present disclosure allows for one to be built if sufficient UWB nodes are present. As such, disclosure will be made hereinbelow to a multi-hop network, however, it will be appreciated that implementation of the disclosure will not always result in a multi-hop network being built.

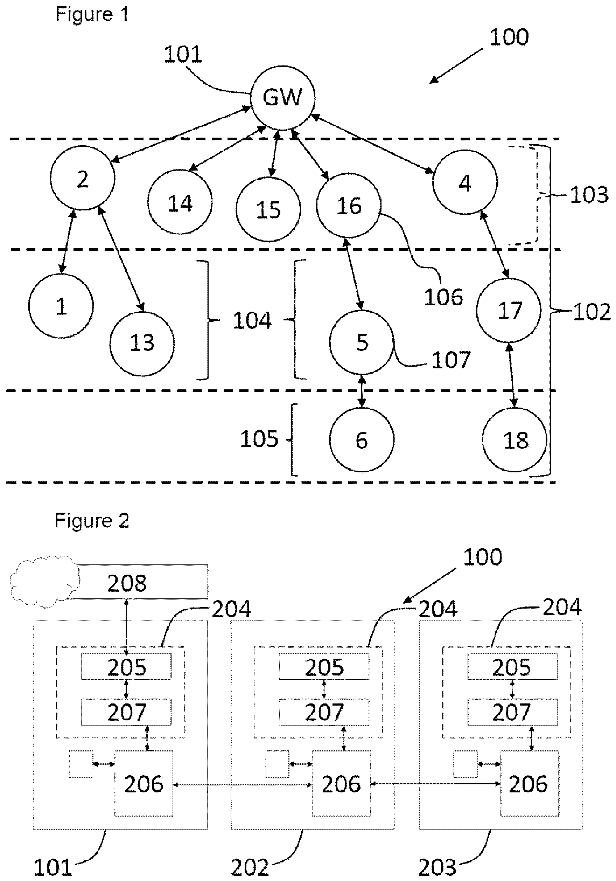

Figure 1 shows an example embodiment of a UWB network 100 that comprises a plurality of spatially separated UWB nodes. Each UWB node may be, for example, a UWB node that is configured for one or more of: remote access to a vehicle; indoor navigation and positioning; or device-to-device communications. Of course, other functionalities for UWB nodes also exist.

One of the UWB nodes of the plurality of UWB nodes is a gateway node (GW, 101), or gateway anchor, which is configured to co-ordinate the building of the UWB network and also to control communications through the UWB network 100. The gateway node 101 may be configured to collect data from anchor nodes and transmit that data to a controller (not shown) which may be, for example, an external server or other processing device. The controller may comprise part of the UWB network or it may be external to the UWB network 100. In one or more embodiments, building may comprise building the network for the first time or rebuilding the network, where rebuilding the network may comprise checking to ensure all previously identified connections are still relevant. Rebuilding the network may also be considered as maintaining the network.

The other nodes of the plurality of UWB nodes may be designated as non-gateway 102 nodes and may be, for example, anchor nodes. The anchor nodes may be fixed reference points used for positioning and localisation. It is possible to measure time-of-flight (ToF) or time difference of arrival (TDoA) between anchor nodes in order to determine the distances between anchor nodes. It will be appreciated that while the distances may be measured herein as distances in terms of time, these time-based distance measurements may be simply converted into physical distance-based measurements using the known speed of the signalling. That is, the ToF or TDoA (or alternative time-based measure of the distance between two nodes) may be indicative of and convertible to a physical distance between the nodes. It is also possible to do the same distance measurements between the anchor nodes and the gateway node, as long as those nodes are within communication reach, i.e., as long as the nodes are able to communicate with each other over UWB.

It will be appreciated that the UWB network may also include other types of nodes other than just gateway nodes or anchor nodes. For example, the other types of nodes may include mobile nodes or mobile tags that exploit the UWB service in a place. As such, the present disclosure will often refer to the gateway node 101 and non-gateway nodes 102.

The present disclosure will refer to neighbouring nodes and neighbour nodes. A node may be determined to be neighbouring another node if the two nodes are able to communicate directly (without intermediate connections) with each other. Thus, if Node A neighbours Node B, then Node B neighbours Node A by definition.

The present disclosure will also refer to child nodes. A child node of any given node may be a node which is arranged downstream from the node in question. The direction of the "stream" in this case flows downwards from the gateway node. Thus, all nodes which are neighbours to the gateway node are child nodes of the gateway nodes. These nodes may be referred to as gateway-neighbouring nodes, since there is no need to refer to them as children of the gateway node, since this is true by definition. Correspondingly, the gateway node is a parent node to all of its children. A node which is downstream of a gateway-neighbouring node will be referred to a child of the gateway-neighbouring (GN) node or a GN-child node. It will be appreciated that such a node may be referred to as a grandchild node of the gateway node and that, correspondingly, the gateway node is a grandparent node of such a node.

Figure 2 shows an example embodiment of the structure of a subset of the nodes 101, 202, 203 of the UWB network 100 and how these nodes 101, 202, 203 may be connected to one-another. In particular, figure 2 shows a UWB network architecture with a simplified three-node diagram. Same reference numerals have been used in figure 2 to refer to the UWB network 100 and the gateway node 101 for ease of reference and consistency. Each UWB anchor 101, 202, 203 may contain a host processor 204 with an application 205 connected to a UWB subsystem (UWBS) 206 via the UWB Command Interface (UCI) 207. In one or more embodiments, the UCI is a specification from the FiRa Consortium and defines the interface to communicate from the host to the UWBS and vice versa. It will be appreciated that other implementations may also be used. The UCI 207 may allow an application 205 to configure the UWB session and send commands to the UWBS 206 and also to receive distance and data notifications. The various UWB nodes 101, 202, 203 in the network may be connected via wireless links. For some nodes to communicate with the gateway 101, a message may need to be sent to their direct parent where their parent is a node further up-stream in the UWB network 100. Their parent may then send the message further upstream until the message reaches the gateway node 101. In the present context, up-stream in the UWB network 100 refers to a direction towards the gateway node 101 and downstream refers to a direction away from the gateway node 101. In this embodiment, the gateway node 101 may be in communication with a cloud-based server 208 from which it is configured to receive instructions and/or data packets for transmission across the UWB network 100.

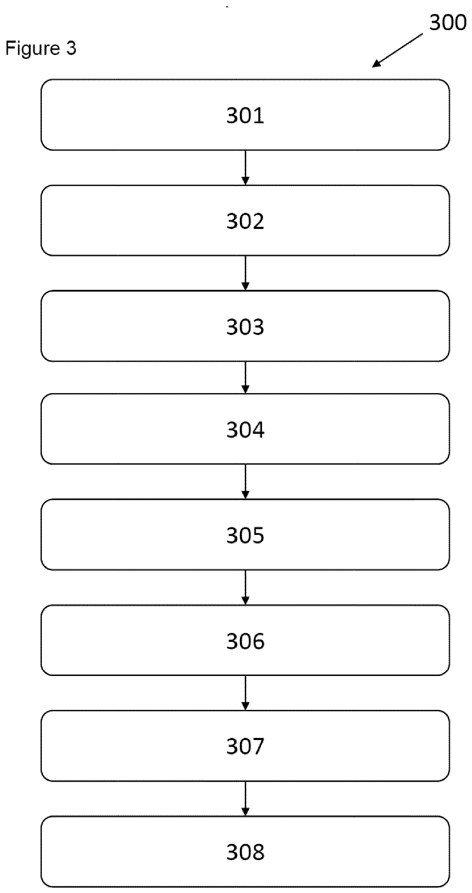

Figure 3 shows an example method 300 of building a multi-hop UWB network 100 according to the present disclosure. In particular, the method allows a disparate arrangement of UWB nodes (at least one gateway node 101 and at least one non-gateway node 102, but preferably a plurality of non-gateway nodes 102, for example) to be built as a multi-hop UWB network 100. The method of building the multi-hop UWB network 100 may be referred to as a progressive neighbour discovery scheme which is orchestrated by a gateway node 101. That is, the gateway node 101 may be configured to provide instructions to control which node will enter a discovery mode next and how the timings between the operation of the nodes in various modes will be divided.

The method 300 comprises a step of setting 301 the gateway node 101 into a contention-based-ranging, CBR, initiator mode. Contention-based-ranging is a ranging method in which the UWB nodes send ranging requests and responses at the same time. The initiator of the contention-based-ranging (the gateway node 101 in the present step of the method) is configured to initiate the contention-based-ranging by sending out a ranging request to other devices in the UWB network 100. The request can be used to measure a distance between the initiator and the responding devices. So that they can respond, the method further comprises setting 302 the non-gateway nodes into a CBR responder mode. In the CBR responder mode, the responder node is able to send a response to the initiator node. The exchange between the two nodes allows the initiator node to calculate the distance between the two devices based on the time it takes for the signal to travel between the nodes. Thus, operating in the CBR initiator mode allows the gateway node 101 to identify at least one neighbouring node operating in the CBR responder mode. The gateway node 101 may only receive responses from neighbouring nodes and, as such, neighbours will only be established with nodes with which the gateway node 101 can directly communicate.

Once the modes of the gateway 101 and non-gateway nodes 102 have been set, the method comprises the step of identifying 303, by way of the gateway node 101 operating in the CBR initiator mode, at least neighbouring node to the gateway node 101. The nodes which neighbour the gateway node 101, as identified during operation in the CBR initiator mode will be referred to herein as gateway-neighbouring nodes 103. In some examples, the gateway node 101 may identify only a single gateway-neighbouring node 103 while in other examples, the gateway node may identify a plurality of gateway-neighbouring 103 nodes, as is in the case depicted in figure 1. Once the gateway node 101 has identified its neighbouring nodes 103, the nodes of the plurality of nodes may be referred to as: the gateway node 101; and the at least one gateway-neighbouring node 103 and zero or more undiscovered nodes 104, 105. It will be appreciated that there must be some undiscovered nodes 104, 105 (nodes which do not neighbour the gateway node) in order for the UWB network to be configured as a multi-hop UWB network, as transmitting data packets to a neighbouring node would only incur a single hop transmission. In some implementations, however, the process may be implemented and the gateway node may find that the configuration of nodes in the network are arranged in such a way that only a single-hop UWB network can be generated.

The method 300 further comprises setting 304 the gateway node 101 into a two-way ranging, TWR, controller mode and setting 305 each of the identified gateway-neighbouring nodes 103 into a TWR controlee mode. While operating in the TWR controller and TWR controlee modes, the gateway node 101 and gateway-neighbouring nodes 103 are configured to transfer data between each other. In particular, the gateway node 101 may be able to transmit messages (or data packets) to the gateway-neighbouring nodes 103. Further, the gateway-neighbouring nodes 103 may transmit messages to the gateway node 101. In this way, two-way communication may be provided for. When operating in the TWR mode controller mode, the gateway node is further able to provide for measuring the distance to the identified gateway-neighbouring nodes. Any other node which operates in a TWR controller mode, as described later, is also able to provide for measuring a distance between themself and any other nodes operating in a TWR controlee mode.

The method 300 further comprises, for a first gateway-neighbouring (FGN) 106 node 106 wherein the FGN 106 node is one of the nodes identified as a neighbouring node 103 to the gateway node 101: setting 305 the FGN node 106 into the CBR initiator mode and setting 306 each undiscovered node 104, 105 into the CBR responder mode wherein operating in the CBR initiator mode allows the FGN node 106 to identify at least one neighbouring child node 107 operating in the CBR responder mode, wherein the neighbouring child node is a node with which the node in question can communicate and which is downstream of the node in question. The CBR initiator mode and the CBR responder modes in this case are fundamentally the same modes as have already been described but, in this case, it is the first gateway-neighbouring node 106 which operates in the CBR initiator mode. It can be noted that it is at least any as-of-yet undiscovered nodes 104, 105 which are set to the CBR responder mode; the undiscovered nodes 104, 105 are the nodes of the plurality of nodes which are not the gateway node 101 and which have not been identified as gateway-neighbouring nodes 103. By only allowing the first gateway-neighbouring node 106 to identify child nodes which neighbour it from the list of undiscovered nodes 104, 105, it is ensured that each node is only communicatively linked to a single node upstream (towards the gateway node and, in this case, it is the gateway node itself) but each node can potentially be connected to a plurality of nodes downstream from itself (away from the gateway node). In one or more embodiments, in order to reach a particular node, only a single path may exist, as is demonstrated in figure 1. In other embodiments, additional links between nodes may be generated such that multiple paths to a node are available. These additional paths may be generated as back-up or redundant paths which can be used in the case of fault or failure. In particular, the gateway node and other gateway-neighbouring nodes may also enter the CBR responder mode and any of these which neighbour the FGN node may be identified or confirmed as neighbouring nodes.

It will be appreciated that the steps of setting a node into the CBR initiator mode and setting all remaining undiscovered nodes, which would comprise any nodes which remain undesignated as neighbouring nodes to any other node and are not the gateway node, into the CBR responder mode may be performed for each, or a plurality, of the nodes of the UWB network. By setting nodes into these respective modes, the node which is operating in the initiator mode is configured to identify whether it has any neighbouring child nodes amongst the any remaining neighbouring nodes. It will be appreciated that this process may be repeated for nodes until there are no more remaining undiscovered nodes in the UWB network 100. Further, there may be some occasions where there are remaining UWB nodes in the UWB network 100 are not neighbours to the node which is being set into the CBR initiator mode. As such, in some instances, the operation of one or more nodes in the initiator mode may not result in the identification of any neighbouring child nodes. A node which does not identify any down-stream neighbours may therefore be the final node in a particular chain. Four end-of-chain nodes are depicted in the example of figure 1, i.e., nodes 1, 13, 6 and 18.

In one or more examples, each of the gateway-neighbouring, GN, nodes 103 may be sequentially set into the CBR initiator mode in order to identify downstream child neighbours, which may be designated as GN-child nodes 104, before any of the GN-child nodes are set into the CBR initiator mode. In other embodiments, after the FGN 106 node has been set into the initiator mode and identified its neighbouring child nodes, FGN-child nodes 107, a first FGN-child node may be set into the CBR initiator mode such that it can identify its own neighbouring child nodes 107. That is, the UWB network 100 may work down a single chain identifying neighbouring child nodes. After a single chain of UWB nodes in the UWB network has been mapped (has had all possible neighbouring child nodes identified) the gateway node may cause the method to move back to the most upstream node which has not been set into the CBR initiator mode and then work down a next chain. In one or more embodiments, after each node has identified all of its neighbouring child nodes by way of its operation in the CBR initiator mode, it may be configured to no-longer operate in the CBR initiator going forward and, instead, the next node to operate in the CBR initiator mode may take the timeslot (period of time) used by its predecessor for operation in the CBR initiator mode.

For each node which is set in the CBR initiator mode, the method comprises identifying 307, by way of the respective node (such as the FGN node) operating in the CBR initiator mode, any neighbouring child-node (such as at least one FGN-neighbouring node 107). In the example of the FGN node 106 operating in the CBR initiator mode, the identified node may be labelled as an FGN-child node 107 and, as such, the plurality of nodes may comprise at least the gateway node 101, at least the FGN node 106 and at least one FGN-child node 107. In examples where the FGN node does not have any child nodes, the plurality of nodes may comprise at least the gateway node and the FGN node 106. There may further be zero or more undiscovered nodes after the FGN-child node 107 has been identified. That is to say that the gateway node 101, the FGN node 106 and the FGN-child node 107 together define a multi-hop network where data can be transferred from the gateway node to the FGN node and on from the FGN node to the FGN-child node 107 and, as such, there may be no undiscovered nodes after these neighbouring relationships have been defined. Of course, it will be appreciated that the plurality of nodes may comprise further nodes with nodes that neighbour the FGN-child nodes 107 or with multiple child nodes neighbouring one or more of the nodes in the UWB network 100.

The method may further comprise, if an FGN-child node 107 has been identified, setting 308 the FGN node 106 into a TWR controller mode and setting each FGN-child node 107 into a TWR controlee mode in which the FGN node is configured to transmit data to each of the identified FGN-child nodes 107 and in which the FGN-child nodes 107 can transmit data to the FGN node 106. This step may be repeated for each node for which neighbouring nodes are identified during the identifying step, such that each node having neighbouring nodes downstream of it is sequentially set into a TWR controller mode and each of its respective neighbouring nodes are set into a TWR controlee mode in which the controller node is configured to transmit data to each of the identified child nodes and data can be transmitted from the neighbouring child nodes to the node. This step is comparable to the TWR controller node in which the gateway node 101 operates and any comments provided above in respect of the TWR controller mode of the gateway node are equally applicable to the operation of any other node in the TWR controller mode.

The operation of each node in its respective TWR controller mode is non-contemporaneous with the operation of any of its neighbouring nodes in their respective TWR controller mode. That is to say that no two neighbouring nodes will operate in a TWR controller mode at the same time (contemporaneously), as this would result in conflicts in the data transfer. In one or more embodiments, no two nodes of the plurality of nodes may operate in the TWR controller node contemporaneously. Each node which has downstream (child) neighbouring nodes may operate in the TWR initiator mode at different times. These different times may be sequentially scheduled. In other embodiments, no two nodes within a predetermined number of intervening nodes or within a predetermined number of hops may operate in the TWR controller mode contemporaneously. For example, no two nodes may operate contemporaneously in the TWR controller mode unless there are at least one, two, three or more intervening nodes which are not operating in the TWR controller mode. The intervening nodes may ensure that no conflicts in data transfer occur. In one or more embodiments, the gateway node 101 may be configured to schedule the TWR controller mode for each node which has downstream neighbouring nodes in order to ensure that it conflicts in data transfer do not occur.

The method of repeating the steps of: setting a node into the CBR initiator mode; setting (at least) each undiscovered node into the CBR responder node; identifying any nodes that neighbour the node operating in the CBR initiator mode; and, if neighbouring child nodes have been identified, setting the node into a TWR controller mode and setting each child node into a TWR controlee mode may be repeated until there are no more undiscovered nodes.

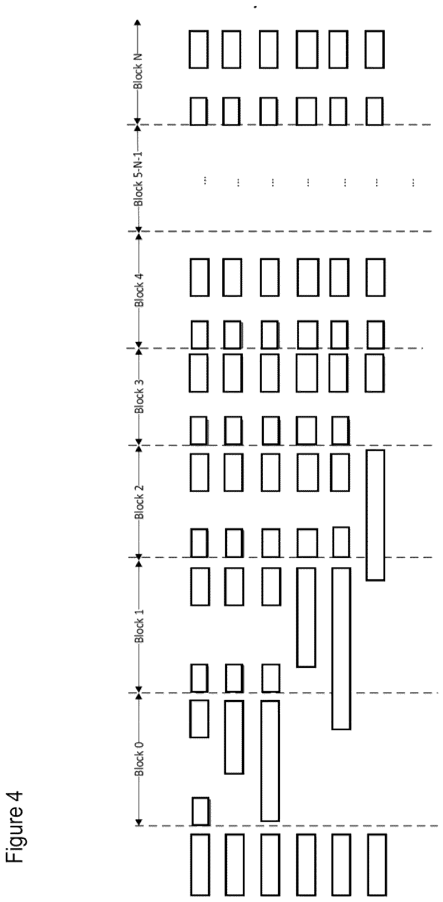

Figure 4 shows an example embodiment of a timing diagram of the method 300 described above. In figure 4, the modes of operation of the gateway node (GW) and anchors 2, 4, 14, 15 and 16 of figure 1 are depicted. In block 0, the gateway node enters a TWR controller mode (C), however, since no neighbouring child nodes have been identified, no neighbouring child nodes can enter the TWR controlee mode. Over time, the anchors will be set into the CBR responder mode (R) in which they attempt to detect whether a CBR initiator is attempting to identify neighbouring child nodes. Each non-gateway node of the plurality of nodes may periodically enter the CBR responder mode periodically or randomly in order to detect whether another node is attempting to identify neighbouring nodes. As can be seen in the example of time-block 0, anchor node 2 and anchor node 4 enter the responder mode at different points in time, which may occur because the different nodes may need to boot up at different times or start their UWB sessions at different times. During block 0, after it has operated in the TWR controller mode, the gateway node enters the CBR initiator mode. During block 0, only two nodes operate in the CBR responder mode at a time that fully overlaps with the operation of the gateway node in the CBR initiator mode; these two nodes are designated as gateway neighbouring nodes. It is noted that the term "blocks", as used here, may be blocks as defined in IEEE 802.15.4z-2020, which defines the UWB PHY and parts of MAC (Medium Access Control).

During block 1, the gateway node re-enters the TWR controller mode and, now that anchors 2 and 4 have been designated as neighbouring nodes, they are set into the TWR controlee mode. During simultaneous operation in these modes, the gateway node can transmit data packets to and receive data packets from anchors 2 and 4. Also during block 1, anchors 14 and 15 enter a CBR responder mode and these overlap with the operation of the gateway node in the CBR initiator mode such that these nodes can be designated as gateway-neighbouring nodes. During operation of the gateway node in the CBR initiator mode, anchor nodes 2 and 4 are able to synchronise with the gateway node such that they operate in the CBR responder mode at the same time as the gateway node operates in the CBR initiator mode.

As can be seen, during block 2, the gateway node is configured to operate in the TWR controller mode and each of nodes 2, 4, 14 and 15 operate in the TWR controlee mode such that data can be transferred from the gateway node to each of its neighbouring node and to the gateway mode from each of its neighbouring nodes. During this block of time, anchor 16 is also identified as a gateway-neighbouring node and so two-way communication between anchor 16 and the gateway node initiates in this case from block 4 onwards. From this point, all neighbouring nodes have been identified and so the two-way communication periods (operation in the TWR controller and TWR controlee modes) can continue for as long as necessary.

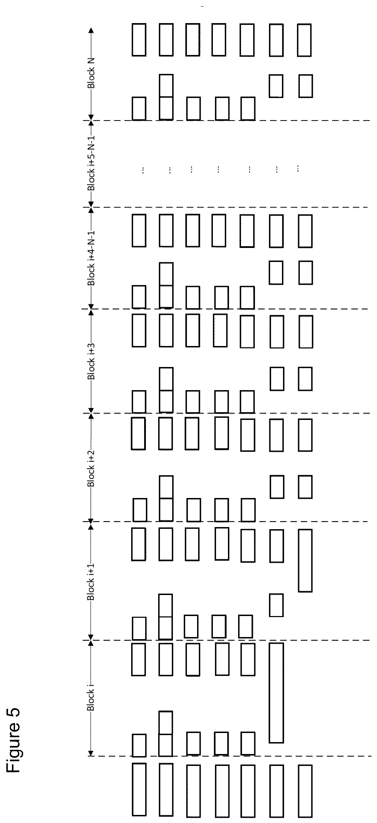

Figure 5 shows an example timing diagram which depicts how gateway-neighbouring (GN) node 2 identifies its child neighbours. As can be seen in block i, after the gateway node has operated in the TWR controller mode, anchor 2 can operate in the TWR controller mode. Since no neighbouring nodes for anchor 2 have been identified yet, no nodes operate in the TWR controlee mode. At a later point during block i, anchor 2 operates in the CBR initiator mode while at least the undiscovered nodes operate in the CBR responder mode. In one or more embodiments, all nodes other than anchor 2 may operate at this point in the CBR responder mode, however, only down-stream nodes may be identified as children nodes during operation in the CBR modes, as only these nodes will participate in the TWR session of the node acting as the TWR controller. In this case, during block i, anchor 1 operates in the CBR responder mode while anchor 2 is operating in the CBR initiator mode and, as such, anchor 1 can be identified as a node 2-neighbouring node. It will be appreciated that any two nodes that are capable of communicating with each other will be neighbours to each other, however, any given node will only actively identify its downstream neighbours during its operation in a CBR initiator mode and reference may be made primarily herein to a node's neighbours in the context of downstream identification. In one or more embodiments, in order to determine whether a node is of the same level or a lower level (children nodes), nodes may include routing information, such as a hop count of other routing metric, in the messages.

During block i+1, anchor 2 operates in the TWR controller mode and, because it has been identified as an anchor 2-neighbouring node, anchor 1 operates in the TWR controlee mode to allow for two-way communication. During block i+1, anchor 13 also operates in the CBR responder mode contemporaneously with anchor 2 and so this node can also be identified as an anchor 2-neighbouring node. Thus, in each subsequent block of time, both anchors 1 and 2 operate in the TWR controlee mode when anchor 2 is operating in the CBR controller mode. As is depicted in figure 2, none of the gateway-neighbouring nodes, nor the gateway node itself, operate in the TWR controlee mode while anchor 2 is operating in the TWR controller mode.

The method may further comprise generating a map of the network based on interconnections between the nodes, wherein an interconnection between two of the nodes in the map is defined based on those two nodes being determined to be neighbouring nodes. The map of the network may be a visual or represented as data indicative of the network of the nodes that have been identified to be neighbouring nodes and, as such, represents how data can be sent between nodes of the network. It is also possible to determine the relative positions of all nodes in a co-ordinate system based on neighbour distance estimates measured and propagated to an external server connected to the gateway node.

The method may further comprise methods to ensure that data, in the form of data packets, is transmitted to desired destination nodes.

In one or more embodiments, the method may comprise receiving instructions at the gateway node 101 that a data packet is to be transmitted to a destination node, wherein the destination node is a non-gateway node in the plurality of nodes. The method further comprises generating routing data for inclusion in the data packet indicative of the nodes of the multi-hop UWB network 100 that are to be traversed for the data packet to reach the destination node. Referring back to figure 1, the gateway node 101 may receive instructions that indicate that a data packet should be transmitted to node 6. The gateway node 101 may then generate routing data indicative that the data packet should be transmitted to node 6 via nodes 16 and 5, respectively. The routing data may be based on the desired destination node and the network map. The method may finally comprise transmitting the data packet to the destination node according to the routing data. The UWB network 100 may be configured such that the data packet is transmitted between nodes during the operation of the nodes when operating in the TWR controller or TWR controlee modes. Each node may be configured to interpret the routing data in order to ensure that the data packet is transmitted to the correct node at each point in the UWB network.

Similarly, the method may comprise receiving instructions at a non-gateway node 102 that a data packet is to be transmitted to a destination node wherein the destination node is another non-gateway node 102 in the plurality of nodes. The method may further comprise generating routing data for inclusion in the data packet indicative of the nodes of the multi-hop UWB network 100 that are to be traversed for the data packet to reach the destination node and the method may further comprise transmitting the data packet to the destination node according to the routing data. The routing data may be based on the starting node, the destination node and the network map. In this example, it may be necessary for the data packet to be transmitted up-stream (towards the gateway node) for one, two or more nodes before being transmitted downstream to the destination node. In some examples, the data packet may be transmitted all the way back to the gateway node 101 before it can be transmitted back downstream to the destination node. In other examples, upstream transmission may not be necessary, for example, where data transmission is from node 16 to node 6. The UWB network 100 may be configured such that the data packet is transmitted between nodes during the operation of the nodes when operating in the TWR controller or TWR controlee modes. Each node may be configured to interpret the routing data in order to ensure that the data packet is transmitted to the correct node at each point in the UWB network.

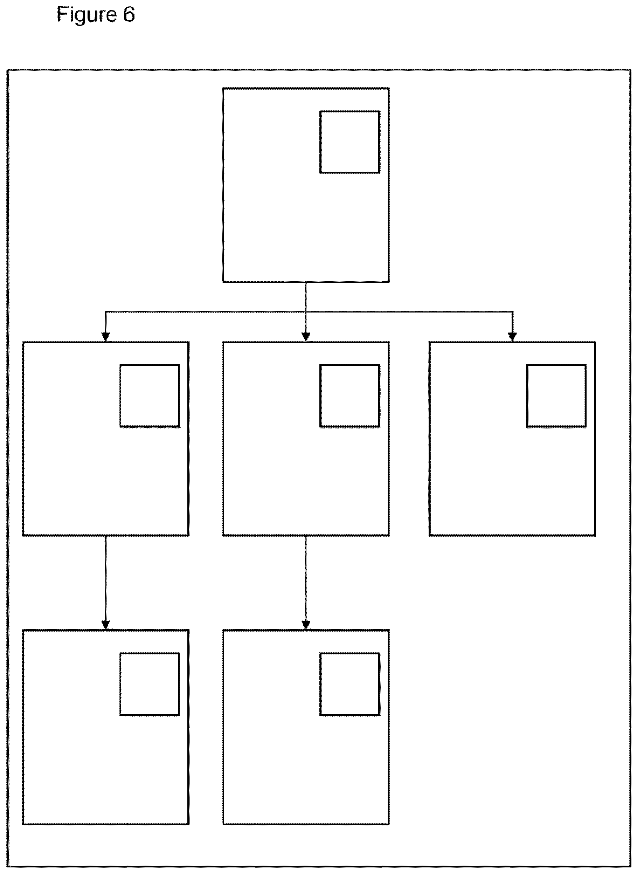

Figure 6 depicts a system 600 comprising a plurality of devices 601 and a UWB network according to the present disclosure wherein each device 601 comprises a UWB node 602 of the plurality of UWB nodes such that the UWB network is distributed across the devices. The UWB network comprises a plurality of spatially separated UWB nodes 602, wherein the plurality of UWB nodes 602 comprises a gateway node and a plurality of non-gateways nodes. The UWB network further comprises, or is configured to receive instructions from, a controller (not shown). The controller is configured to provide instructions to the gateway node configured to cause the gateway node to implement the method described with reference to figures 1 - 5. In one or more embodiments, the devices of the system 600 may be IoT devices in an array of IoT devices and the UWB network may provide for communication and distance estimation between the IoT devices of the array of IoT devices.

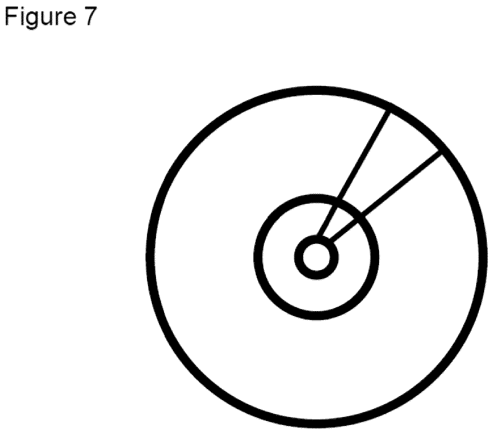

Figure 7 shows a computer program product 700 comprising computer program code configured to, when executed by a controller, cause the controller to provide instructions to a gateway node of a UWB network to implement the method described with reference to figures 1 - 5.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

**In** some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

**In** other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A method of building a UWB network, wherein the UWB network comprises a plurality of spatially separated UWB nodes, wherein the plurality of UWB nodes comprises a gateway node and a plurality of non-gateway nodes, the method comprising;
setting the gateway node into a contention-based-ranging, CBR, initiator mode and setting the non-gateway nodes into a CBR responder mode wherein operating in the CBR initiator mode allows the gateway node to identify at least one neighbouring node operating in the CBR responder mode;
identifying, by way of the gateway node operating in the CBR initiator mode, at least one gateway-neighbouring node, such that the plurality of UWB nodes comprises the gateway node and at least one gateway-neighbouring node and zero or more undiscovered nodes;
setting the gateway node into a two-way ranging, TWR, controller mode and setting each of the identified gateway-neighbouring nodes into a TWR controlee mode in which the gateway node is configured to transfer data to each of the identified gateway-neighbouring nodes;
for at least a first gateway-neighbouring, FGN, node:
setting the FGN node into the CBR initiator mode and setting any undiscovered node into the CBR responder mode wherein operating in the CBR initiator mode allows the FGN node to identify any neighbouring child node operating in the CBR responder mode wherein a child node is arranged downstream from the gateway node and the FGN node;
identifying, if available, by way of the FGN node operating in the CBR initiator mode, at least one FGN-child node such that, if an FGN-child node is identified, the plurality of UWB nodes comprises the gateway node, at least the FGN node, at least one FGN-child node and zero or more undiscovered nodes and, if an FGN-child node is not identified, the plurality of UWB nodes comprises the gateway node and at least the FGN node and zero or more undiscovered nodes; and
if at least one FGN-child node has been identified, setting the FGN node into a TWR controller mode and setting each FGN-child node into a TWR controlee mode in which the FGN node is configured to transfer data to the or each identified FGN-child node,
wherein the operation of each node in its respective TWR controller mode is non-contemporaneous with the operation of any of its neighbouring nodes in their respective TWR controller mode.

2. The method of claim 1 wherein the method comprises repeating the steps of:
setting a node into the CBR initiator mode;
setting each undiscovered node into the CBR responder mode;
identifying any child nodes that neighbour the node operating in the CBR initiator mode; and if neighbouring child nodes have been identified;
setting the node into a TWR controller mode and setting each neighbouring child node into a TWR controlee mode.

3. The method of any preceding claim further comprising generating a map of the network based on interconnections between the nodes, wherein an interconnection between two of the nodes in the map is defined based on those two nodes being determined to be neighbouring nodes.

4. The method of any preceding claim comprising receiving instructions at the gateway node that a data packet is to be transmitted to a destination node, wherein the destination node is a non-gateway node in the plurality of nodes; generating routing data for inclusion in the data packet indicative of the nodes of the UWB network that are to be traversed for the data packet to reach the destination node; and transmitting the data packet to the destination node according to the routing data.

5. The method of any preceding claim further comprising receiving instructions at a non-gateway node that a data packet is to be transmitted to a destination node wherein the destination node is another non-gateway node in the plurality of nodes or the gateway node; generating routing data for inclusion in the data packet indicative of the nodes of the UWB network that are to be traversed for the data packet to reach the destination node; and transmitting the data packet to the destination node according to the routing data.

6. The method of claim 4 or claim 5 wherein the routing data includes instructions to cause the data packet to be routed via neighbouring nodes during the operation of those neighbouring nodes in their respective TWR controller mode and TWR controlee mode.

7. The method of claim 3 and any of claims 4 - 6 wherein the step of generating routing data comprises generating the routing data based on the destination node and the map of the network.

8. A UWB network comprising a plurality of spatially separated UWB nodes wherein the plurality of UWB nodes comprises a gateway node and a plurality of non-gateway nodes and further comprising a controller, wherein the controller is configured to provide instructions to the gateway node to implement the method of any preceding claim.

9. The UWB network of claim 8 wherein each UWB node is further configured to perform one or more additional functionalities selected from: remote access; control system; system monitoring; sensing; localisation; and navigation.

10. A computer program product comprising computer program code configured to, when executed by a controller, cause a controller to provide instructions to a gateway node of a UWB network to implement the method of any of claims 1 - 7.

11. A system comprising a plurality of devices and a UWB network of claim 8 or claim 9 wherein each device comprises a UWB node of the plurality of UWB nodes such that the UWB network is distributed across the devices.

12. The system of claim 11 wherein the devices are IoT devices in an array or IoT devices.
